(19) Europäisches Patentamt / European Patent Office / Office européen des brevets

(11) **EP 2 347 934 B1**

(12) **EUROPEAN PATENT SPECIFICATION**

(45) Date of publication and mention
of the grant of the patent:
**10.10.2012   Bulletin 2012/41**

(51) Int Cl.:
***B60R 21/0132*** *(2006.01)*

(21) Application number: **10151613.6**

(22) Date of filing: **26.01.2010**

(54) **Method and control device for the detection of a side tackling crash of a vehicle**

Verfahren und Steuerungsvorrichtung zur Erkennung eines seitlichen Unfalls eines Fahrzeugs

Procédé et dispositif de contrôle pour la détection de collision latérale d'un véhicule

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**27.07.2011   Bulletin 2011/30**

(73) Proprietors:
- **Robert Bosch GmbH
  70442 Stuttgart (DE)**
- **Volvo Car Corporation
  405 31 Göteborg (SE)**

(72) Inventors:
- **Rauh, Christian
  81377, Muenchen (DE)**
- **Becker, Jens
  70597, Stuttgart (DE)**
- **Wogel, Anders
  42470, Olofstorp (SE)**
- **Doerr, Alfons
  70597, Stuttgart (DE)**
- **Korn, Christian
  70190, Stuttgart (DE)**
- **Axelsson, Anders
  42341, Torslanda (SE)**
- **Nilsson, Paer
  41671, Goeteborg (SE)**
- **Harda, Peter
  41324, Goeteborg (SE)**
- **Rittler, Stephan
  73660, Urbach (DE)**
- **Hild, Hansjoerg Markus
  70806, Kornwestheim (DE)**
- **Koerner, Olaf
  71640, Ludwigsburg (DE)**

(74) Representative: **Zöllner, Hartmut
Robert Bosch GmbH
Zentralstelle ZGE3
Postfach 30 02 20
70442 Stuttgart (DE)**

(56) References cited:
**WO-A1-03/042005      DE-A1-102004 031 010
US-A- 6 018 980**

**Description**

Prior art

The present invention relates to a method for the detection of a side tackling crash of a vehicle, to a respective control device as well as to a respective computer program product.

In principle, the activation of restraint means in a vehicle crash is determined by the crash type and the crash severity. Both the crash type and the crash severity to be expected may be analyzed by a combined signal evaluation of acceleration, yaw rate and pressure sensors as well as anticipatory sensors, e.g. radar, integrated in the vehicle.

Appropriate evaluation algorithms as well as sensor configurations may be configured and applied by means of standardized crash tests.

WO2008/048159A1 proposes evaluating a yaw acceleration in combination with acceleration signals in order to detect certain crash types such as an off zone side crash. Here, a relation may be established between the rotatory movement measured in the control device and the deceleration calculated, whereby the point of the the application of force to the vehicle may be ascertained.

DE 102004031010 also discloses a method and device for detecting a crash of a vehicle.

Disclosure of the invention

On this background, the present invention serves to present a method, further a control device using this method as well as finally a respective computer program product according to the independent claims. Advantageous embodiments result from the respective dependent claims and the subsequent description.

The inventive approach serves to enable a classification of crash situations taking rotatory and linear alterations of movement in the course of the crash into account. This makes possible that side crashes may also be observed when there is no intrusion into the vehicle hit by a vehicle or an object and/or the intruding vehicle or object does not act on the vehicle hit virtually directly. Instead, with the help of the inventive approach, there may also be recognized situations in which the vehicle observed tackles another vehicle or object.

Apart from the separate evaluation of rotatory and linear acceleration information, which may be used for the detection of discrete crash scenarios, the central idea of the invention is the determination of a universal feature of complex crash courses, which comprise both linear and rotatory alterations of movement.

According to the invention, one may draw on a combined signal evaluation of acceleration, yaw rate and pressure sensors integrated in the vehicle as well as anticipatory sensors, e.g. radar. As a rule, the acceleration sensors may serve to analyze the signal waveforms and the alteration of the speed in the longitudinal and lateral directions, the yaw rate may serve to evaluate the development of a vehicle rotational movement around the vertical axis, the pressure sensors may serve to rapidly recognize planar crash contacts, and the anticipatory sensors may basically serve to detect the crash speed and a crash overlap.

In standardized crash tests, the combined observation of linear and rotatory alterations of movement has so far been of minor importance for the crash classification, although, in the field, the combination of linear and rotatory alterations of movement may often be observed in a crash. The application of force to the vehicle during the crash may, in the case of combined linear and rotatory accelerations, have a substantial influence on the movement of passengers and therefore on the optimum activation of various restraint means. Therefore, according to the invention, a crash type classification is not only designed on the basis of linear alterations of movement but may also take the application of force with respect to crash-induced yaw movements into account.

According to the invention, a side tackling detection is made possible by evaluating the application of force to a vehicle as well as the rotary movement thereof.

The present invention provides a method for the detection of a side tackling crash of a vehicle, comprising: receiving first sensor information and second sensor information via an interface, the first sensor information being designed to indicate a side crash event acting on a first area of the vehicle and the second information being designed to indicate a side crash event acting on a second area of the vehicle; receiving temporally successive longitudinal acceleration values and temporally successive transverse acceleration values via a further interface; summing up the temporally successive longitudinal acceleration values in order to determine temporally successive summation values of the longitudinal acceleration, and summing up the temporally successive transverse acceleration values in order to determine temporally successive summation values of the transverse acceleration; ascertaining temporally successive correlation values by correlating the temporally successive summation values of the longitudinal acceleration and the temporally successive summation values of the transverse acceleration; and providing information on a side tackling crash detected when the temporally successive correlation values are within a predetermined value range and the first sensor information and the second sensor information indicate side crash events acting in a manner temporally offset from one another.

The side tackling crash may be a side crash event in which the vehicle slides along the side of another vehicle or an object. A lateral application of force caused by the side crash event does not act locally on a lateral area of the vehicle but is distributed in a time staggered manner among several neighboring areas on that side of the vehicle on which the side crash event is occurring. The pieces of sensor information may be allocated each to different areas of the same side of the vehicle. In the different areas, the application of force may be detected at different points in time due to the characteristic course of the side tackling crash. The different points in time may be conveyed by means of the individual pieces of sensor information. The sensor information may be designed to indicate the side crash event when an underlying measurement value, for example a compressive force or a transverse acceleration value, reaches a predetermined threshold value. Therefore, the sensor information may be provided by peripherally installed pressure sensors or acceleration sensors, for example. The temporally successive longitudinal acceleration values and transverse acceleration values may relate to a centre of mass of the vehicle. The summing up of the acceleration values may be effected by integration or another kind of totals formation. The summing up may be effected over a predetermined period of time. The summation values may be correlated by forming a ratio at different points in time each, that is to say a ratio of a summation value of the longitudinal acceleration allocated to a certain point in time and a summation value of the transverse acceleration allocated to the certain point in time. Therefore, by the correlation, a relation may be established between temporally corresponding summation values of the longitudinal acceleration and of the transverse acceleration. The information on the side tackling crash detected may indicate that, based on the sensor information and the acceleration values, an occurrence of a side tackling crash was ascertained. The information on the side tackling crash detected may be used for triggering passenger protection means.

The temporally successive correlation values may be in a coordinate system spanned by the temporally successive summation values of the longitudinal acceleration and the temporally successive summation values of the transverse acceleration. Here, the predetermined value range may be limited within the coordinate system by two lines through origin. Therefore, the lines through origin may be used as threshold values. A comparison of the correlation values with the threshold values may be effected by means of suitable comparison methods.

The first sensor information and the second sensor information may represent signals provided by two sensors, which are arranged in the vehicle peripherally and in a manner spaced apart in the vehicle's longitudinal direction. For this purpose, known sensors employed in the automotive industry may be used.

Depending on a temporal order, in which the first and second sensor information indicate the side crash events acting in a manner temporally offset from one another, a directional course of the side tackling crash may be determined. In this manner, it may be ascertained whether the consequences of the crash proliferate from the rear end of the vehicle towards the front or vice versa.

A detectable time span may lie between the side crash events indicated by the first sensor information and by the second sensor information. The information on the side tackling crash detected may be provided when the temporally successive correlation values are within the predetermined value range at least within a section of the detectable time span. In this manner, a temporal correlation between the different criteria for determining the side tackling crash may be provided. The time span detectable is dependent on how far the sensors allocated to the sensor information are spaced apart and how fast the side tackling crash propagates along the vehicle's side.

Furthermore, according to an embodiment, third sensor information may be received via the interface. Here, the first sensor information may be designed to indicate a side crash event acting on a frontal side area of the vehicle, the second sensor information may be designed to indicate a side crash event acting on a centre side area of the vehicle and the third sensor information may be designed to indicate a side crash event acting on a rear side area of the vehicle. The information on the side tackling crash detected may be provided when the side crash event is indicated first by the first sensor information, subsequently by the second sensor information and again subsequently by the third sensor information, or in reverse order. In this manner, a side tackling crash may be differentiated from another kind of side crash. Further sensor information may be used in order to increase the evaluation accuracy.

According to an embodiment, temporally successive yaw rate values of the vehicle may be received via the interface. The information on the side tackling crash detected may be provided when ratio values formed of the temporally successive yaw rate values and the temporally successive summation values of the transverse acceleration are within a predetermined plausibilization range. In this manner, the yaw rate of the vehicle may be used as a plausibility check. If one or a predetermined number of ratio values lies, in a relevant period of time, in which the correlation values and the sensor information are also evaluated, outside the plausibilization range, this may suggest that the event detected is not a side tackling crash.

In this context, the ratio values may be in a coordinate system spanned by the temporally successive yaw rate values and the temporally successive summation values of the transverse acceleration. The predetermined plausibilization range may be limited within the further coordinate system by two lines through origin. Consequently, the lines through origin may serve as threshold values.

The present invention further provides a control device configured to perform or implement the steps of the inventive method. This embodiment of the invention in the form of a control device also serves to achieve the object underlying the invention in a fast and efficient manner

At hand, a control device may be an electric device, which processes sensor signals and, in dependence thereon, outputs control signals. The control device may comprise an interface, which may be configured in hardware and/or in software. In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with a program code stored on a machine-readable carrier such as a semiconductor memory, a hard disk or an optical memory and utilized for performing the method of any one of the aforementioned embodiments, when the program for is executed on a control device.

In the following, the invention is exemplarily explained in detail by means of the accompanying drawings, in which:

Fig. 1    shows a flow chart of an embodiment of the present invention;

Fig. 2    shows a block diagram of an embodiment of the present invention;

Fig. 3    shows a schematic representation of a side tackling crash;

Fig. 4    shows a model representation of a side tackling crash; and

Fig. 5    shows a further model representation of a side tackling crash.

In the Figures below, like or similar elements may be provided with like or similar reference numbers, with a repeated description being dispensed with.

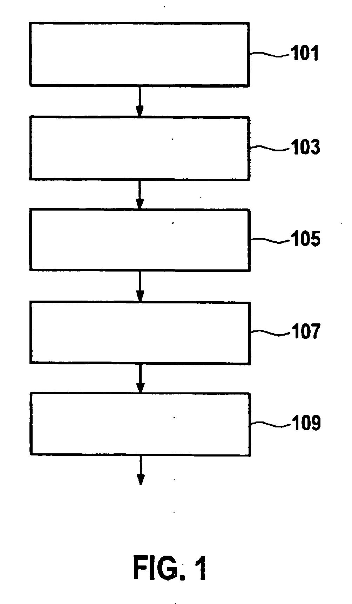

Fig. 1 shows a flow chart of a method for the detection of a side tackling crash of a vehicle, according to an embodiment of the present invention.

In a step 101, sensor information is received. The sensor information may be provided by different sensors arranged in the vehicle and may be received via an interface of a control device, for example. The sensor information is designed to indicate side crash events regarding different areas or positions of the vehicle. Further, in a step 103, longitudinal acceleration values and transverse acceleration values of the vehicle are received. The acceleration values may be provided by one or more sensors arranged in the vehicle and may be received via an interface of a control device, for example. The acceleration values may indicate a continuous representation of the vehicle's acceleration in the longitudinal and transverse directions. The acceleration values may be received continuously and simultaneously with the sensor information.

In a step 105, the acceleration values are continuously summed up or integrated. In this manner, temporally successive summation values of the longitudinal acceleration may be determined by summing up the longitudinal acceleration values received, and temporally successive summation values of the transverse acceleration may be determined by summing up the transverse acceleration values received. The summation values of the transverse acceleration and of the longitudinal acceleration are related to one another in a step 107. In doing so, summation values of the transverse acceleration and of the longitudinal acceleration, which may each be allocated to the same points in time, may be correlated to one another so that a temporal course of correlation values is ascertained.

Based on the temporal course of correlation values and the sensor information, it is determined in a step 109, whether the vehicle is involved in a side tackling crash. If a side tackling crash is detected by means of the inventive method, respective information on the side tackling crash detected is provided. The information may e.g. be provided in the form of an electric signal or a flag to be evaluated. Alternatively, the information may be provided, if a side tackling crash is what is not the case. According to the invention, a side crash event is classified as a side tackling crash, when the temporal course of correlation values is within a predetermined value range and each sensor information separately indicates side crash events occurring at different points in time.

For plausibilization, a course of the yaw rate of the vehicle may be analyzed in a further method step. For this purpose, a relation may be established between the course of the yaw rate and the summation values of the transverse acceleration. If a ratio formed of the course of the yaw rate and the summation values of the transverse acceleration is within a predetermined plausibilization range, this may suggest a side tackling crash. In this case, a provision of the information on the side tackling crash may be inhibited.

The inventive method steps may be implemented in one or several control devices or logic units.

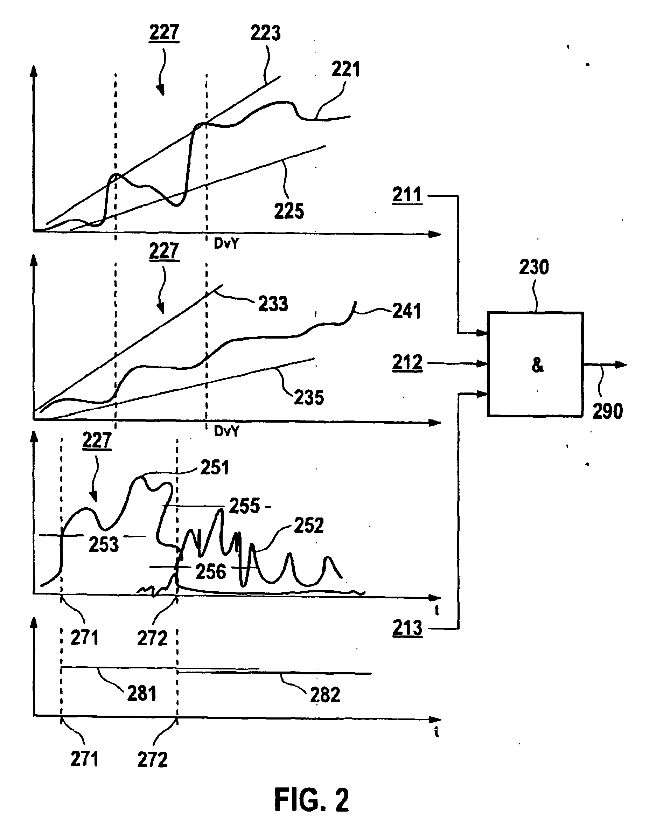

Fig. 2 shows a block diagram of a method for the detection of a side tackling crash of a vehicle, according to an embodiment of the present invention.

The inventive method is based on a function, which determines, using a yaw rate signal and acceleration signals, for example from the airbag control device as well as peripheral sensors such as a peripheral acceleration sensor (PAS), an upfront sensor (UFS) or a peripheral pressure sensor (PPS), whether a crash occurring is occurring along the vehicle's side. The upfront sensor (UFS) may be a peripheral acceleration sensor, similar to the peripheral acceleration sensor (PAS), but mounted near the front of the vehicle.

Basically, the inventive algorithm consists of three parts or sub functions 211, 212, 213. Fig. 2 shows a functions flow chart for the analysis of the crash situation detection, which, in combination with other classification methods, will in the end lead to a trigger decision for various safety systems. In Fig. 2, the overall function is divided into the three sub functions 211, 212, 213 for better understanding.

The first sub function 211 represents a plausibilization. According to this embodiment, the plausibilization is fulfilled when a temporal course of the yaw rate signal 221, which is represented above the integrated transverse acceleration signal (dvy), is in a certain range of a plane spanned by the yaw rate signal and the integrated transverse acceleration signal dvy.

With respect to the first sub function 211, Fig. 2 shows a coordinate system with the integrated transverse acceleration dvy, that is the integral over the acceleration signal in the Y direction of the vehicle (AccY signal), plotted on the abscissa and the yaw rate plotted on the ordinate. In the coordinate system, the temporal course of the yaw rate signal 221 is represented above the integrated transverse acceleration signal. The yaw rate signal 221 largely flows between two straight lines 223, 225 in the coordinate system. The straight lines 223, 225 may limit an evaluation range. According to this embodiment, the straight lines 223, 225 are spaced from the axes of the coordinate system. If the yaw rate signal 221 is within the evaluation range, a side tackling crash may be indicated. An over- or undershooting of the straight lines 223, 225 may be accordingly detected and evaluated. A respective first evaluation signal may be provided to an evaluation logic 230 by the first sub function 211. According to this embodiment, the yaw rate signal 221 slightly overshoots the upper straight line 223 twice and the lower straight line 225 once, in a collision range 227.

In this manner, the plausibilization may be effected by means of the yaw rate signal 221. If the yaw rate signal 221 is in the defined range between the straight lines 223, 225, then the situation decision made by the parts 212, 213 will be plausible. Physically, such crash situations always involve a rotatory component.

The second and third sub functions 212, 213 contribute to the actual detection of the side tackling behavior.

The second sub function 212 is based on the observation that, in the class of crashes observed, the signals of the integrated longitudinal acceleration dvx and the integrated transverse acceleration dvy are strongly correlated, in so far as a crash trajectory runs, in the plane spanned by dvx and dvy, through a range spanned by two lines through origin 233, 235, as shown in Fig. 2. The physical interpretation underlying this observation will be explained in greater detail below.

With respect to the second sub function 212, Fig. 2 shows a coordinate system with the integrated transverse acceleration (dvy) plotted on the abscissa and the integrated longitudinal acceleration (dvx), that is the integral over the acceleration signal in the X direction of the vehicle, plotted on the ordinate. In the coordinate system, the course 241 of the integrated longitudinal acceleration is represented above the integrated transverse acceleration. The signal waveform 241 runs between the two straight lines 233, 235 in the coordinate system. The straight lines 233, 235 may limit a further evaluation range. According to this embodiment, the straight lines 233, 235 are spaced from the axes of the coordinate system. If the signal waveform 241 is within the further evaluation range, a side tackling crash may be indicated. An over- or undershooting of the straight lines 233, 235 may be accordingly detected and evaluated. A respective second evaluation signal may be provided to the evaluation logic 230 by the second sub function 212. According to this embodiment, the signal waveform 241 runs in the collision range 227 between the straight lines 233, 235.

In side tackling crash scenarios, a force is exerted on the vehicle hit both in the X direction, that is in the vehicle's longitudinal direction, and in the Y direction, that is in the vehicle's transverse direction. The force acting in the X direction has a decelerating effect, whereas the force acting in the Y direction causes a lateral acceleration. If same are integrated and related to each other, a characteristic curve 335, e.g. a threshold value curve, may be laid on the resulting signal 241. Therefore, the case that this threshold value curve is breached is a sign of a side tackling situation.

In the third sub function 113, the so-called satellite sensors, that is the peripheral sensor system, contribute to the detection of the crash situation. Basically, it is detected whether a sensor overshoots a threshold value. If, for one of these sensors, a set threshold value is exceeded, a flag linked to this sensor is set. The order in which the flags of the various peripheral sensors are set, may serve to establish whether the side tackling crash is induced in the front or the rear end of the vehicle.

With respect to the third sub function 213, Fig. 2 shows two coordinate systems having plotted the time on each respective abscissa. In the upper coordinate system, values of sensor information, for example of a PPS sensor and a PAS sensor, are plotted on the ordinate. In the upper coordinate system, temporal courses of a PPS signal 251 and a PAS signal 252 are shown. Regarding the PPS signal 251, a threshold 253 (Pps Thd) is shown, and regarding the PAS signal 252, an upper threshold 255 (Pas Upper Thd) and a lower threshold 256 (Pas Lower Thd) are shown.

According to this embodiment, the PPS signal 251 exceeds the threshold 253 (Pps Thd) at a first point in time 271, and the PAS signal 252 exceeds the lower threshold 256 at a second point in time 272.

The first point in time 271 and the second point in time 272 temporally limit the collision range 227. Accordingly, the integrated transverse acceleration values existing or ascertained at these points in time 271, 272 each limit the collision range 227 in the first and second sub functions 211, 212.

In the lower coordinate system, a satellite sequence is plotted on the ordinate. At the first point in time 271, a first signal 281, which indicates an overshooting of the threshold 253 by the PPS signal 251, is raised to a predetermined value. At the second point in time 272, a second signal 282, which indicates an overshooting of the threshold 256 by the PAS signal 252, is raised to a predetermined value. If the signals 281, 282 exhibit a predetermined waveform, this may suggest a side tackling crash. Accordingly, a third evaluation signal may be provided to the evaluation logic 230 by the third sub function 213.

The waveforms shown of the signals 281, 282 may be an example of forward side tackling whereas in the configuration, this sequence has to be fulfilled.

A further distinctiveness of such crash situations is represented by the sequence of signals 251, 252 of the peripheral sensors. In a frontally induced side tackling crash, first the peripheral sensor closest to the opposing vehicle or the object shows a signal 251, then the sensor second closest shows a signal, and so on. This particularity of such crash situations serves to determine a characteristic sequence of the sensor signals 251, 252. For each sensor signal 251, 252, a separate threshold value query is performed. If the set threshold 253, 255, 256 is exceeded, this will indicate the tackling of the opposing vehicle or the object at the location at which the respective sensor is positioned.

For a side tackling situation to be present, the following conditions must be fulfilled in the given order:

Number of sensors = n
Condition 1: Sensor_n-1 prior to Sensor_n-2.
Condition 2: Sensor_n-2 prior to Sensor_n-3 and Condition 1
Condition i: Sensor_n-i prior to Sensor_n and all previous conditions.

If the crash situation proceeds beginning at the rear instead of the front end of the vehicle, the conditions of the sequence will have to be considered in reverse order.

The validation of the crash severity may be effected by using the algorithm parts present of an existing side algorithm for the validation of severe crashes.

According to this embodiment, the evaluation logic 230 may be configured to perform an AND operation between the first evaluation signal, the second evaluation signal and the third evaluation signal and provide as a result the information 290 on the side tackling crash.

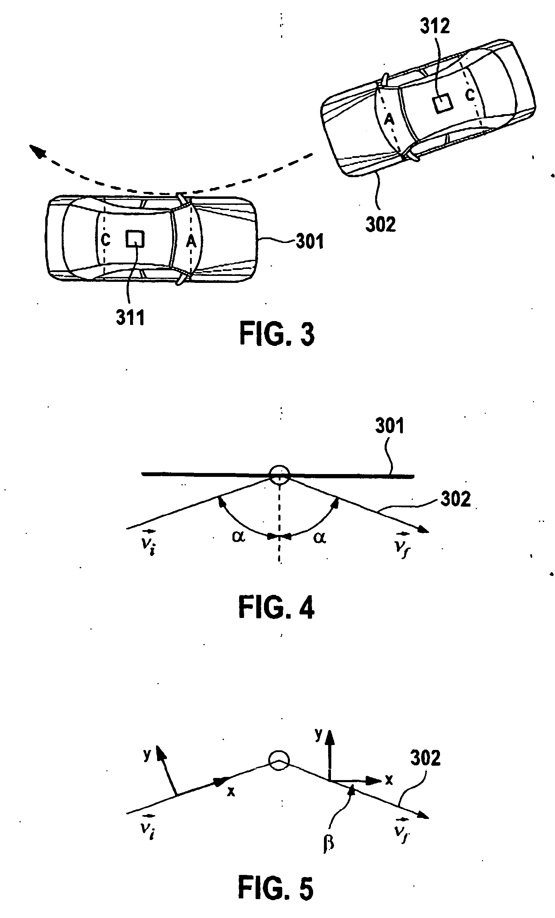

Fig. 3 shows a drawing of vehicles in a side-tackling-like crash situation, according to an embodiment of the present invention. What is shown is a target 301 in the form of a vehicle and a bullet 302 in the form of another vehicle. The target 301 comprises a center of mass 311, and the bullet 302 comprises a center of mass 312.

As indicated by the arrow line, the bullet 302 hits the target 301 such that the bullet's 302 left-hand side scratches along the target's 301 left-hand side, originating from a frontal area of the target 301. The target 301 may be moving or standing still.

Of course, the crash situation may also be induced from the back, that is from the rear end of the target vehicle, i.e. the target 301.

In the following, a physical interpretation of the correlation between the dvx and dvy signals, which is to be observed in side tackling crashes and was illustrated in Fig. 2, is represented by means of a bounce back model.

The following assumptions are made:

On the one hand, the course of the crash will result in relatively small deformations. Therefore, hardly any kinetic energy is degraded. On the other hand, the vehicles 301, 302 quasi elastically scatter, a Y acceleration measured substantially results in the formation of a slip angle ß. Therefore, yaw rates are small.

Figs. 4 and 5 show a bounce back model.

Fig. 4 shows a vehicle or an object 301, which a vehicle 402 impacts at an acute angle and ricochets off from at the same angle. The representation shown in Fig. 4 yields the model shown in Fig. 5, in which a slip angle $\beta$ is shown.

In Fig. 4, there is represented the reflection of the vehicle 302 observed from another vehicle or object 301 symbolized by a line. In the reflection of the vehicle 302, the magnitude of the incoming speed $\|v_i\|$ and of the outgoing speed $\|v_f\|$ hardly differs, whereas the direction of movement around the angle $2\alpha$ does change.

If a yaw movement is nevertheless measured in the vehicle reference system, same will result in the formation of a slip angle ß, as illustrated in Fig. 5.

Therefore, the following applies in the vehicle's reference system (quantities designated by tildes):

Prior to crash:

$$\tilde{\tilde{v}}_i = \begin{pmatrix} v_x \\ 0 \end{pmatrix}$$

After the side tackling situation:

$$\tilde{\tilde{v}}_f = D(\beta)\begin{pmatrix} v_x \\ 0 \end{pmatrix} = \begin{pmatrix} \cos(\beta) & \sin(\beta) \\ -\sin(\beta) & \cos(\beta) \end{pmatrix}\begin{pmatrix} v_x \\ 0 \end{pmatrix}$$

$$\left| dv_x \right| = (1 - \cos(\beta))\ \left| v_x \right|$$

$$\left| dv_y \right| = \sin(\beta)\ \left| v_x \right|$$

Observing the differentiated quantities $|dv_x|$ and $|dv_y|$, there becomes apparent a correlation between the two in that they equal zero, when the slip angle equals zero, ß = 0, and that they are monotonically increasing as the slip angle is increasing.

The inventive function may be employed in any control device embodiment integrating both rotation rate sensors and acceleration sensors in the respective rotation plane. The difficulty in the crash classification of rotatory crashes is the establishment of a concrete crash feature so as to be able to determine a suitable activation concept for restraint means in respectively complex crash situations. The inventive algorithm concept is therefore suitable for rotation rate aided algorithms in vehicle systems. The adoption of the invention is suitable for enabling paths for yaw rate based algorithms.

The embodiments described and shown in the figures are only exemplary. Different embodiments may be combined with one another entirely or with respect to individual features. Also, an embodiment may be supplemented by features of a further embodiment. Furthermore, inventive method steps may be executed repeatedly or in an order other than described.

**Claims**

1. Method for the detection of a side tackling crash of a vehicle (301), comprising:

   receiving first sensor information (251) and second sensor information (251) via an interface, the first sensor information being designed to indicate a side crash event acting on a first area of the vehicle and the second information being designed to indicate a side crash event acting on a second area of the vehicle;
   receiving temporally successive longitudinal acceleration values and temporally successive transverse acceleration values via a further interface;
   summing up the temporally successive longitudinal acceleration values in order to determine temporally successive summation values of the longitudinal acceleration, and summing up the temporally successive transverse acceleration values in order to determine temporally successive summation values of the transverse acceleration;
   ascertaining temporally successive correlation values (241) by correlating the temporally successive summation values of the longitudinal acceleration and the temporally successive summation values of the transverse acceleration; and
   providing information (290) on a side tackling crash detected when the temporally successive correlation values are within a predetermined value range (333, 335) and the first sensor information and the second sensor information indicate side crash events acting in a manner temporally offset from one another (271, 272).

2. Method according to claim 1, wherein the temporally successive correlation values (241) are in a coordinate system spanned by the temporally successive summation values of the longitudinal acceleration and the temporally successive summation values of the transverse acceleration, and wherein the predetermined value range is limited within the coordinate system by two lines through origin (233, 235).

3. Method according to any one of the preceding claims, wherein the first sensor information (251) and the second sensor information (252) represent signals provided by two sensors, which are arranged in the vehicle peripherally and in a manner spaced apart in the vehicle's longitudinal direction.

4. Method according to any one of the preceding claims, wherein, depending on a temporal order (271, 272), in which the first and second sensor information (251, 252) indicate the side crash events acting in a manner temporally offset from one another, a directional course of the side tackling crash is determined.

5. Method according to any one of the preceding claims, wherein a detectable time span (227) lies between the side crash events indicated by the first sensor information (251) and by the second sensor information (252), and wherein the information (290) on the side tackling crash detected is provided when the temporally successive correlation values (241) are within the predetermined value range (233, 235) at least within a section of the detectable time span.

6. Method according to any one of the preceding claims, wherein, further, third sensor information is received via the interface, and wherein the first sensor information is designed to indicate a side crash event acting on a frontal side area of the vehicle, the second sensor information is designed to indicate a side crash event acting on a centre side area of the vehicle and the third sensor information is designed to indicate a side crash event acting on a rear side area of the vehicle, and wherein the information (290) on the side tackling crash detected is provided when the side crash event is indicated first by the first sensor information, subsequently by the second sensor information and again subsequently by the third sensor information, or in reverse order.

7. Method according to any one of the preceding claims, wherein temporally successive yaw rate values of the vehicle are received via the interface and the information (290) on the side tackling crash detected is provided when ratio values (221) formed of the temporally successive yaw rate values and the temporally successive summation values of the transverse acceleration are within a predetermined plausibilization range (223, 225).

8. Method according to claim 7, wherein the ratio values are in a coordinate system spanned by the temporally successive yaw rate values and the temporally successive summation values of the transverse acceleration, and wherein the predetermined plausibilization range is limited within the further coordinate system by two lines through origin (223, 225).

9. Control device, configured to perform the steps of a method according to any one of claims 1 to 8.

10. Computer program product with a problem code stored on a machine-readable carrier, for performing the method according to any one of claims 1 to 8, when the program is executed on a control device.

**Patentansprüche**

1. Verfahren zum Detecktieren eines Seiten-Tackling-crash eines Fahrzeugs (301), umfassend:

Empfangen erster Sensorinformation (251) und zweiter Sensorinformation (252) über eine Schnittstelle, wobei die erste Sensorinformation ausgelegt ist, ein Seiten-Crashereignis anzuzeigen, welches auf einen ersten Bereich des Fahrzeugs einwirkt, und die zweite Sensorinformation ausgelegt ist, ein Seiten-Crashereignis anzuzeigen, welches auf einen zweiten Bereich des Fahrzeugs einwirkt;
Empfangen zeitlich aufeinanderfolgender Längsbeschleunigungswerte und zeitlich aufeinanderfolgender Querbeschleunigungswerte über eine weitere Schnittstelle;
Summieren der zeitlich aufeinarderfolgenden nangsbeschleunigungswerte, um zeitlich aufeinanderfolgende Summierungswerte der Längsbeschleunigung zu bestimmen, und Summieren der zeitlich aufeinanderfolgenden Querbeschleunigungswerte, um zeitlich aufeinanderfolgende Summierungswerte der Querbeschleunlgung zu bestimmen;
Ermitteln zeitlich aufeinanderfolgender Korrelationswerte (241) durch Kerrelieren der zeitlich aufeinanderfolgenden Summierungswerte der Längsbeschleunigung und der zeitlich aufeinanderfolgenden Summrerungswerte der Querbeschleunigung; und

Bereitstellen einer Information (290) über einen Seiten-Tackling-Crash, der detektiert wurde, wenn die zeitlich aufeinanderfolgenden Korrelationswerte innerhalb eines vorbestimmten Wertebereichs (333, 335) Liegen, und die erste Sensorinformation und die zweite Sensorinformation Seiten-Crashereignisse anzeigen, die in zeitlich voneinander versetzter Weise (271, 272) wirken.

2. Verfahren nach Anspruch 1, wobei sich die zeitlich aufeinanderfolgenden Korrelationswerte (241) in einem Koordinatensystem befinden, das von den zeitlich aufeinanderfolgenden Summierungswerten der Längsbeschleunigung und den zeitlich aufeinanderfolgenden Summierungswerten der Querbeschleunigung überspannt ist, und wobei der vorbestimmte Wertebereich innerhalb des Koordinatensystems von zwei Linien durch Ursprung (233, 235) begrenzt ist.

3. Verfahren nach einem der vorhergehenden Ansprüche, wobei die erste Sensorinformation (251) und die zweite Sensorinformation (252) Signale darstellen, die von zwei Sensoren bereitgestellt werden, die peripher und in beabstandeter Weise in Längsrichtung des Fahrzeugs angeordnet sind.

4. Verfahren nach einem der vorhergehenden Ansprüche, wobei abhängig von einer zeitlichen Reihenfolge (271, 272), in der die erste und zweite Sensorinformation (251, 252) die Seiten-Crashereignisse in zeitlich voneinander versetzter Weise anzeigen, ein richtungweisender Verlauf des Seiten-Täckling-Crash bestimmt wird.

5. Verfahren nach einem der vorhergehenden Ansprüche, wobei zwischen den van der ersten Sensorinformation (251) und der zweiten Sensorinformation (252) angezeigten Seiten-Crashereignissem eine dctektierbare Zeitspanne (227) liegt, und wobei die Information (290) über den detektierten Seiten-Tackling-Crash bereitgestellt wird, wenn die zeitlich aufeinanderfolgenden Korrelationswerte (241) in mindestens einem Abschnitt der detektierbaren Zeitspanne innerhalb des vorbestimmten Wertebereichs (233, 235) liegen.

6. Verfahren nach einem der vorhergehenden Ansprüche, wobei ferner eine dritte Sensorinformation über die Schnittstelle empfangen wird, und wobei die erste Sensorinformation ausgelget ist, das auf den vorderen Seitenbereich des Fahrzeugs einwirkende Seiten-Crashcreignis anzuzeigen, die zweite Sensorinformation ausgelegt, ist, ein auf den mittleren Seitenbereich des Fahrzeugs einwirkendes Seiten-Crashereignis anzuzeigen, und die dritte Sensorinformation ausgelegt ist, ein auf den hinteren Seitenbereich des Fahrzeugs einwirkendes Seiten-Crashereignis anzuzeigen, und wobei die Information (290) über den detektierten Seiten-Tackling-Crash bereitgestellt wird, wenn das Seiten-Crashereignis als erstes von der ersten Sensorinformation, dann von der zweiten Sensorinformation und danach von der dritten Sensorinformation oder in umgekehrter Reihenfolge angezeigt wird.

7. Verfahren nach einem der vorhergehenden Ansprüche, wobei zeitlich aufeinanderfolgende Gierge-schwindigkeitswerte des Fahrzeugs über die Schnittstelle emplangen werden und die Information (290) über den detektierten Seiten-Tackling-Crash bereitgestellt wird, wenn aus den zeitlich aufeinamderfolgenden Giergeschwindigkeitswerten und den zeitlich aufeinanderfolgenden Summierungswerten der Querbeshleunigung gebildete Verhältniswerte (221) innerhalb eines vorbestimmten Plausibilisierungshereichs (223, 225) liegen.

8. Verfahren nach Anspruch 7, wobei die Verhältniswerte in einem Koordinatensystem liegen, das von den zeitlich aufeinanderfolgenden Giergeschwindig-keitswerten und den zeitlich aufeinanderfolgenden Summierungswerten der Querbeschleunigung überspannt wird, und wobei der vorbestimmte Plausibilisierungsbereich innerhalb des weiteren Koordinatensystems von zwei Linien durch Ursprung (223, 225) begrenzt ist.

9. Steuergerät; das konfiguriert ist, die Schritte eines Verfahrens nach einem der Ansprüche 1 bis 8 durchzuführen.

10. Computerprogrammprodukt mit einem in einem maschinenlesbaren Träger gespeicherten Problemcode zur Durchführung des Verfahrens nach einem der Ansprüche 1 bis 8, wenn das Programm auf einem Steuergerät aufgeführt wird.

**Revendications**

1. Procédé pour détecter une collision latérale d'un véhicule (301), comprenant les étapes consistant à :

recevoir des informations d'un premier capteur (251) et des informations d'un deuxième capteur (252) par l'intermédiaire d'une interface, les information du premier capteur étant conçues pour indiquer un événement de collision latérale agissant sur une première zone du véhicule et les informations du deuxième capteur éLanL conçues pour indiquer un événement de collision latérale agissant sur une seconde zone du véhicule ;
recevoir des valeurs d'accélération longitudinale successives temporaires et des valeurs d'accélération transversale successives temporaires par l'intermédiaire d'une autre interface ;
sommer les valeurs d'accélération longitudinale successives temporaires de manière à déterminer des valeurs de sommation successives temporaires de l'accélération longitudinale, et sommer les valeurs d'accélération transversale successives temporaires de manière à déterminer des valeurs de sommation successives temporaires de l'accélération transversale ;
vérifier des valeurs de corrélation successives temporaires (241) en corrélant les valeurs de sommation successives temporaires de l'accélération longitudinale et les valeurs du sommation successives temporaires de l'accélération transversale ; et
fournir des informations (290) sur un choc latéral détecté lorsque les valeurs de corrélation successives temporaires se situent dans une plage de valeurs prédéterminées (333, 335) et les informations du premier capteur et les informations du deuxième capteur indiquent des événements de collision latérale agissant de manière temporellement décalée les uns par rapport aux autres (271, 272).

**2.** Procédé selon la revendication 1, dans lequel les valeurs de corrélation successives temporaires (241) sont dans un système de coordonnées sous-tendu par les valeurs de sommation successives temporaires de l'accélération longitudinale et les valeurs de sommation successives temporaires de l'accélération transversale, et dans lequel la plage de valeurs prédéterminée est limitée dans le système de coordonnées par deux lignes passant par l'origine (233, 235).

**3.** Procédé selon l'une quelconque des revendications précédentes, dans lequel les informations du premier capteur (251) et les informations du deuxième capteur (252) représentent des signaux délivrés par deux capteurs, lesquels sont disposés dans le véhicule de manière périphérique et espacés l'un de l'autre suivant la direction longitudinale du véhicule.

**4.** Procédé selon l'une quelconque des revendications précédentes, dans lequel, en fonction d'un ordre temporel (271, 272), dans lequel les informations du premier capteur et du deuxième capteur (251, 252) indiquent les événements de collision latérale agissant de manière temporellement décalée les uns par rapport aux autres, une propagation directionnelle du choc latéral est déterminée.

**5.** Procédé selon l'une quelconque des revendications précédentes, dans lequel on laps de temps détectable (227) s'écoule entre les événements de collision latérale indiqués par les informations du premier capteur (251) et les informations du deuxième capteur (252), et dans lequel les informations (290) sur le choc latéral détecté sont fournies lorsque les valeurs de corrélation successives temporaires (241) se situent dans une plage de valeurs prédéterminées (233, 235) au moins dans une section du laps de temps détectable.

**6.** Procédé selon l'une quelconque des revendications précédentes, dans lequel, en outre, des informations d'un troisième capteur sont reçues par l'intermédiaire de l'interface, et dans lequel les informations du premier capteur sont conçues pour indiquer un événement de collision latérale agissant sur une zone avant frontale du véhicule, les informations du deuxième capteur sont conçues pour indiquer un événement de collision latérale agissant sur une zone latérale centrale du véhicule, et les informations du troisième capteur sont conçues pour indiquer un événement de collision latérale agissant sur une zone latérale arrière du véhicule, et dans lequel les informations (290) sur le choc latéral détecté sont fournies lorsque l'événement de collision latérale est indiqué tout d'abord par les information du premier capteur, puis par les information du deuxième capteur et ensuite par les informations du troisième capteur, ou dans l'ordre inverse.

**7.** Procédé selon l'une quelconque des revendications précédentes, dans lequel les valeurs d'amplitude de mouvement en lacet successives temporaires du véhicule sont reçues par l'intermédiaire de l'interface et les informations (290) sur le choc latéral détecté sont fournies lorsque les valeurs des rapports (221) formées à partir des valeurs d'amplitude de mouvement en lacet successives temporaires et des valeurs de sommation successives temporaires de l'accélération transversale se situent dans une plage de plausibilité prédéterminée (223, 225).

**8.** Procédé selon la revendication 7, dans lequel les valeurs des rapports sont dans un système de coordonnées sous-tendu par les valeurs d'amplitude de mouvement en lacet successives temporaires et des valeurs de sommation successives temporaires de l'accélération transversale, et dans lequel la plage de plausibilité prédéterminée est limitée dans l'autre système de coordonnées par deux lignes passant par l'origine (223, 225).

9. Dispositif de contrôle configuré pour exécuter les étapes d'un procédé selon l'une quelconque des revendications 1 à 8.

10. Produit programme informatique ayant un code de problème stocké sur un support lisible par une machine destiné à exécuter le procédé selon l'une quelconque des revendications 1 à 8, lorsque le programme est exécuté sur un dispositif de contrôle.

**FIG. 1**

**FIG. 2**

**FIG. 3**

**FIG. 4**

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008048159 A1
- DE 102004031010